# EUROPÄISCHE PATENTSCHRIFT

(11) **EP 2 761 201 B1**
(45) Veröffentlichungstag und Bekanntmachung des Hinweises auf die Patenterteilung: **28.10.2015**
(21) Anmeldenummer: 12773226.1
(22) Anmeldetag: 27.09.2012
(51) Int. Cl.: F16D 65/097, F16D 65/22

(54) **SCHEIBENBREMSE, INSBESONDERE FÜR NUTZFAHRZEUGE, SOWIE NIEDERHALTEFEDER EINER SOLCHEN SCHEIBENBREMSE**
DISC BRAKE, IN PARTICULAR FOR UTILITY VEHICLES, AND RETAINER SPRING IN SUCH A DISC BRAKE
FREIN À DISQUE, EN PARTICULIER POUR VÉHICULES UTILITAIRES, ET RESSORT DE RETENUE D'UN TEL FREIN À DISQUE

(30) Priorität: 29.09.2011 DE 102011115304
(43) Veröffentlichungstag der Anmeldung: 06.08.2014
(73) Patentinhaber: Wabco Radbremsen GmbH, 68229 Mannheim (DE)
(72) Erfinder: JÄGER, Hellmut, 67067 Ludwigshafen (DE); MÖLLER, Denny, 99338 Gossel (DE)
(74) Vertreter: Leinweber & Zimmermann
(86) Internationale Anmeldenummer: PCT/EP2012/004066
(87) Internationale Veröffentlichungsnummer: WO 2013/045100

(56) Entgegenhaltungen:
- DE-A1-102009 023 104
- DE-B3-102006 023 964
- JP-A- 2009 058 102

## Beschreibung

Die Erfindung betrifft eine Scheibenbremse, insbesondere für Nutzfahrzeuge, mit einem Bremsbelag, der einen in Dickenrichtung außermittig liegenden ersten Vorsprung aufweist, einer Zuspanneinrichtung zum Drücken des Bremsbelags gegen eine Bremsscheibe, einer Druckplatte, über die die Zuspanneinrichtung beim Bremsen den Bremsbelag gegen die Bremsscheibe drückt, und einer eine Öffnung zum Aufnehmen des ersten Vorsprungs aufweisenden ersten Niederhaltefeder zum Niederhalten des Bremsbelags.

Scheibenbremsen der oben genannten Art sind bekannt, beispielsweise aus der DE 10 2006 023 964 B3.

In der Regel weist ein Bremsbelag einer Scheibenbremse der hier in Rede stehenden Art einen zur Bremsscheibe gerichteten Reibbelag auf, der auf einem in der Regel metallischen Bremsbelagträger (Rückenplatte) befestigt ist. Derartige Bremsbeläge befinden sich beidseitig der Bremsscheibe. Insbesondere bei Nutzfahrzeugscheibenbremsen werden sie in Schachtführungen des Bremssattels und/oder des Bremsenträgers in Umfangsrichtung abgestützt und geführt. Als Radialauflage dienen dabei in der Regel innere Bereiche der Schachtführungen, so daß im Wesentlichen von einem U-förmigen Schacht gesprochen werden kann.

Derartige Bremsbeläge werden bei Sattelscheibenbremsen über eine radiale Sattelöffnung in die Schachtführungen eingesetzt. Zur Vermeidung von Klappergeräuschen und als Sicherung gegen Herausfallen aus der Bremse werden die Bremsbeläge mittels Niederhaltefedern und einem Niederhalter (Niederhaltebügel oder Niederhalteblech) in der erforderlichen Position verspannt. Wegen des Gewichts und der Größe von Nutzfahrzeugbremsbelägen werden als Niederhaltefedern vorzugsweise Blattfedern mit der erforderlichen Federkraft eingesetzt. Diese Blattfedern erstrecken sich längs des oberen Bereichs des Bremsbelagträgers. Sie werden mit der Rückenplatte verbunden, damit sie nicht den Kontakt verlieren.

Die Federwirkung, also die oben erwähnte Verspannung tritt erst dann ein, wenn der quer zur Bremsscheibenebene verlaufende und oberhalb der Niederhaltefedern am Bremssattel - also die Radialöffnung überspannend - befestigte Niederhalter in Funktion tritt, indem er die Niederhaltefeder(n) niederdrückt.

Eine als längliche Blattfeder ausgeführte Niederhaltefeder kann in wenigstens drei Zonen/Wirkungsbereiche eingeteilt werden: den Mittenbereich, gegen den der Niederhalter einwirkt, und die beidseitig davon ausgehenden seitlichen Federschenkel, die mit entsprechenden Konturen des Belagträgers korrespondieren.

Aus vielerlei Gründen, sei es eine vereinfachte Montage/Demontage, eine Ausfederbegrenzung der seitlichen Federschenkel im Fahrbetrieb oder ähnliches, sind die Niederhaltefedern im Stand der Technik verliersicher mit dem Bremsbelagträger verbunden. Beispielhaft wird in diesem Zusammenhang auf die EP 1 916 437 B1, die DE 40 20 287 A1 und die EP 0 694 707 A2 verwiesen, die neben der oben bereits erwähnten DE 10 2006 023 964 B3 einschlägige Lösungen zeigen.

Beispielsweise nach der DE 10 2006 023 964 B3 werden die beiden Bremsbeläge und die Druckplatte mit je einer Niederhaltefeder bestückt. Werden jetzt die jeweils mit einer Niederhaltefeder bestückten Bremsbeläge und die ebenfalls mit einer Niederhaltefeder bestückte Druckplatte über die Radialöffnung in die Schachtführungen eingesetzt, kommt es häufig durch unsachgemäße Belagzuordnung oder durch mangelnde Montagekenntnisse zu Fehleinbauten, die erst später im Feldeinsatz zu Fehlfunktionen und Bremsenausfällen führen. Beispielsweise kann der zuspannseitige Bremsbelag verdreht in den Belagschacht eingesetzt werden, d.h. mit der metallischen Rückenplatte zur Bremsscheibe weisend. Auch kann es passieren, daß der für die Zuspannseite vorgesehene Bremsbelag mit der Niederhaltefeder auf der falschen Bremsscheibenseite, also auf der Felgenseite in die Bremse eingesetzt wird.

Die Druckplatte bei einer einschlägigen Scheibenbremse dient unter anderem dazu, eine in der Scheibenbremse vorgesehene Nachstellspindel an einem Drehen um ihre Achse zu hindern. Dazu weist die Druckplatte eine Öffnung auf, bei der es sich um eine Durchgangsöffnung handeln kann, in die ein entsprechendes Kopplungsglied eingreift, wodurch die Nachstellspindel an der beschriebenen Drehung gehindert ist.

Der Erfindung liegt die Aufgabe zugrunde, die Scheibenbremse der eingangs genannten Art derart weiterzubilden, daß die Betriebssicherheit der Bremse erhöht und die Montage vereinfacht ist.

Die JP 2009058102 A zeigt eine Scheibenbremse ohne Druckplatte und mit einer Niederhaltefeder, die in Axialrichtung nicht mit dem niedergehaltenen Bremsbelag gekoppelt ist.

Erfindungsgemäß wird die gestellte Aufgabe mit einer Scheibenbremse nach Anspruch 1 gelöst.

Wird jetzt beispielsweise der zuspannseitige Bremsbelag mit der den Ansatz aufweisenden Niederhaltefeder auf der falschen Bremsscheibenseite, also auf der Felgenseite in die Bremse eingesetzt, überdeckt sich der Ansatz entweder mit dem dortigen Sattelschenkel oder mit der Bremsscheibe, wodurch der Fehleinbau sofort bemerkt wird. Wird der zuspannseitige Bremsbelag verdreht eingesetzt, also mit der Rückenplatte zur Bremsscheibe weisend, kommt es zu einer Überdeckung des Ansatzes an der Niederhaltefeder mit der Bremsscheibe. Mithin wird auch dieser Fehleinbau sofort bemerkt. Erst in der richtigen Einbaulage korrespondiert der Ansatz mit den übrigen Bauteilen der Bremse, indem er die Druckplatte überdeckt. Fehleinbauten sind mithin zuverlässig vermieden. Auch ist die Montage vereinfacht, weil "automatisch" auf Fehleinbauten hingewiesen wird.

Erfindungsgemäß bevorzugt ist der Ansatz einstückig mit der Niederhaltefeder ausgebildet. Dadurch wird die Teilezahl gering gehalten.

Der Ansatz kann nach einer besonders bevorzugten Ausführungsform der Erfindung zum Niederhalten der Druckplatte dienen. Dadurch wird die Teilezahl noch weiter reduziert, weil eine eigene Niederhaltefeder für die Druckplatte eingespart werden kann.

Dabei ist erfindungsgemäß bevorzugt der Ansatz als zweite Niederhaltefeder ausgebildet. Er hat also die gleichen Funktionen wie die erste Niederhaltefeder bzw. wie eine bei herkömmlichen Scheibenbremsen vorgesehene separate Niederhaltefeder für die Druckplatte.

Die erste und/oder die zweite Niederhaltefeder weist/weisen nach einer besonders bevorzugten Ausführungsform der Erfindung zwei seitliche Schenkel und einen Mittenbereich auf. Diese Ausgestaltung ist für die beabsichtigten Funktionen und Wirkungen der Niederhaltefeder(n) besonders vorteilhaft.

Nach einer weiter bevorzugten Ausführungsform der Erfindung ist vorgesehen, daß ein seitlicher Schenkel der ersten Niederhaltefeder durch einen Schlitz von dem benachbarten seitlichen Schenkel der zweiten Niederhaltefeder getrennt ist. Diese Ausgestaltung erlaubt es den beiden benachbarten seitlichen Schenkeln der Niederhaltefedern, unabhängig voneinander vorzuspannen bzw. je nach Schlitzlänge/n geforderte Federkräfte aufzubringen.

Die Niederhaltefedern können erfindungsgemäß beliebig ausgestaltet sein. Bevorzugt ist aber vorgesehen, daß die erste und/oder die zweite Niederhaltefeder zumindest abschnittweise eben oder bogenförmig ist/sind oder einen nach innen oder außen weisenden Radialansatz aufweist/aufweisen. Welche Ausgestaltung vorteilhaft ist, wird entsprechend den jeweiligen individuellen Gegebenheiten gewählt.

Erfindungsgemäß weiter bevorzugt ist vorgesehen, daß der Ansatz eine Öffnung zum Aufnehmen eines an der Druckplatte ausgebildeten zweiten Vorsprungs aufweist. Dadurch wird die Druckplatte mit dem Ansatz gekoppelt.

Schließlich ist es erfindungsgemäß besonders bevorzugt vorgesehen, daß die erste Öffnung eine Durchgangsöffnung ist und der erste Vorsprung in eingebautem Zustand in Axialrichtung der Bremsscheibe über eine Begrenzung der ersten Öffnung übersteht, um eine Ausfederbegrenzung für einen seitlichen Federschenkel der ersten Niederhaltefeder zu bilden. Dadurch wird sichergestellt, daß im Falle von radialen Schwingungen auf Schlechtwegstrecken der seitliche Federschenkel immer wieder in die für die Federfunktion wichtige Ausgangslange (Ruhelage) gebracht werden kann, weil ausgeschlossen ist, daß die Kopplung des Vorsprungs mit der Durchgangsöffnung verloren geht.

Neben der oben im einzelnen erläuterten Scheibenbremse betrifft die Erfindung auch eine Niederhaltefeder einer solchen Scheibenbremse.

Im folgenden ist die Erfindung anhand bevorzugter Ausführungsbeispiele unter Bezugnahme auf die beiliegende Zeichnung mit weiteren Einzelheiten näher erläutert. Dabei zeigen
- Figur 1: schematisch eine Ansicht einer Scheibenbremse nach einem Ausführungsbeispiel der Erfindung,
- Figur 2: eine perspektivische Ansicht eines Bremsbelags mit einer Niederhaltefeder der Scheibenbremse nach Figur 1,
- Figur 3: eine Ansicht des Bremsbelags mit der Niederhaltefeder nach Figur 2,
- Figur 4: eine Draufsicht auf den Bremsbelag mit der Niederhaltefeder nach Figur 2,
- Figur 5: die gleiche Ansicht wie Figur 2, jedoch zusammen mit einer Druckplatte, und
- Figur 6: die gleiche Ansicht wie Figur 2, jedoch von einem anderen Ausführungsbeispiel der Niederhaltefeder.

Zu der in der Zeichnung dargestellten Scheibenbremse gehört ein Bremssattel 10, mit einer Öffnung 12. Über die Öffnung 12 sind ein felgenseitiger Bremsbelag 14 mit einer Rückenplatte 16 und einem Reibbelag 18 sowie ein zuspannseitiger Bremsbelag 20 mit einer Rückenplatte 22 und einem Reibbelag 24 in die Bremse eingesetzt. Zum Niederhalten des felgenseitigen Bremsbelags 14 dient eine Niederhaltefeder 26. Zum Niederhalten des zuspannseitigen Bremsbelags 20 dient eine Niederhaltefeder 28. Die Niederhaltefedern 26 und 28 werden mittels eines Niederhaltebügels 30 vorgespannt, der mittels beispielsweise einer Schraube 32 arretiert ist. Anstelle des Niederhaltebügels 30 kann auch ein Niederhalteblech oder eine andere Niederhaltevorrichtung zum Einsatz kommen. Dies gilt auch für die der Befestigung dienenden Schrauben 30.

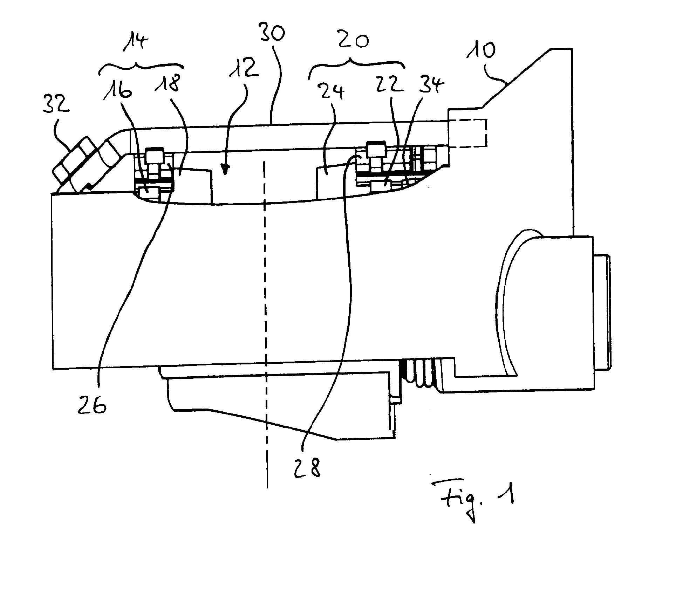

In Figur 1 auf der rechten Seite liegt innerhalb des Sattels 10 eine Zuspanneinrichtung, die in ihrem Aufbau bekannt ist und daher in der Zeichnung nicht dargestellt und hier auch nicht weiter erläutert wird. Die Zuspanneinrichtung drückt beim Bremsen gegen eine Druckplatte 34, die ihrerseits den zuspannseitigen Bremsbelag 20 in Richtung auf die Bremsscheibe, d.h. in Figur 1 nach links drückt. Die in der Zeichnung nicht dargestellte Bremsscheibe liegt nämlich zwischen den beiden Bremsbelägen 14 und 20.

Die Niederhaltefeder 28 weist einen Mittenbereich 36 und zwei seitliche Federschenkel 38 und 40 auf. Die beiden Federschenkel 38 und 40 weisen je eine Durchgangsöffnung 42 bzw. 44 auf, durch die sich je ein Vorsprung 46 bzw. 48 des Bremsbelags 20 erstreckt. Die beiden Vorsprünge 46 und 48 weisen jeweils Einkerbungen auf, von denen eine beispielhaft mit der Bezugszahl 50 bezeichnet ist. Sie ist derart angebracht, daß sich ein Materialüberstand ergibt, durch den der betreffende Ansatz über eine Begrenzung der zugehörigen Durchgangsöffnung übersteht, um eine Ausfederbegrenzung für den betreffenden seitlichen Federschenkel zu bilden. Der in Axialrichtung der Bremsscheibe weisende Materialüberstand ist nicht nur auf die darstellte/n Einkerbung/en beschränkt. Vielmehr kann der Überstand vielfältig ausform- bzw. anbringbar sein, wenn damit die Funktion als Ausfederbegrenzung bzw. Verliersicherung erfüllt wird.

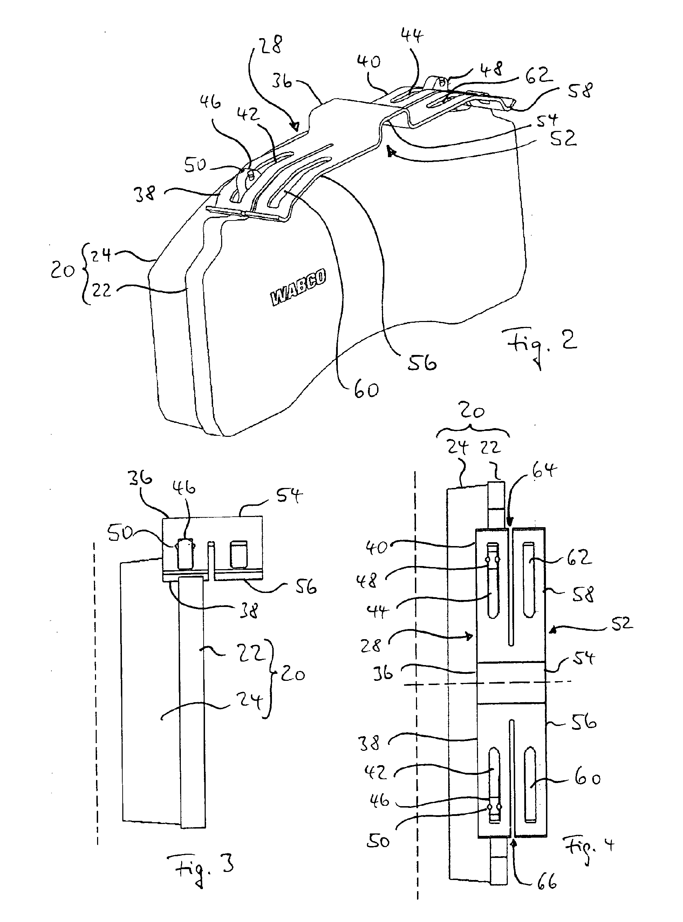

Wie insbesondere den Figuren 2 bis 4 zu entnehmen ist, weist die Niederhaltefeder 28 einen Ansatz auf, der in montiertem Zustand über die Rückenplatte 22 des Bremsbelags 20 übersteht. Dieser Ansatz ist mit der Bezugszahl 52 bezeichnet. Er ist bei dem dargestellten Ausführungsbeispiel in Form einer Niederhaltefeder ausgebildet, weshalb im folgenden auch von der Niederhaltefeder 52 die Rede ist.

Die Niederhaltefeder 52 ist genauso gestaltet wie die Niederhaltefeder 28. Sie sind einstückig miteinander ausgebildet. Die Niederhaltefeder 52 weist einen Mittenbereich 54 sowie zwei seitliche Federschenkel 56, 58 mit jeweils einer Durchgangsöffnung 60 bzw. 62 auf. Zwischen den Federschenkeln 40 und 58 liegt ein Schlitz 64. Zwischen den Federschenkeln 38 und 56 liegt ein Schlitz 66. Dadurch können die Federschenkel jeweils unabhängig voneinander ausschwingen. Demgegenüber können einander benachbarte Federschenkel aber auch ohne dazwischenliegenden Schlitz ausgebildet sein.

In montiertem Zustand erstrecken sich Ansätze 68, 70 der Druckplatte 34 durch die Öffnungen 60 bzw. 62 der den Ansatz bildenden Niederhaltefeder 52, um die Druckplatte mit der Niederhaltefeder in Zuspannrichtung zu koppeln. Hier ist bei dem dargestellten Ausführungsbeispiel keine Ausfederbegrenzung vorgesehen.

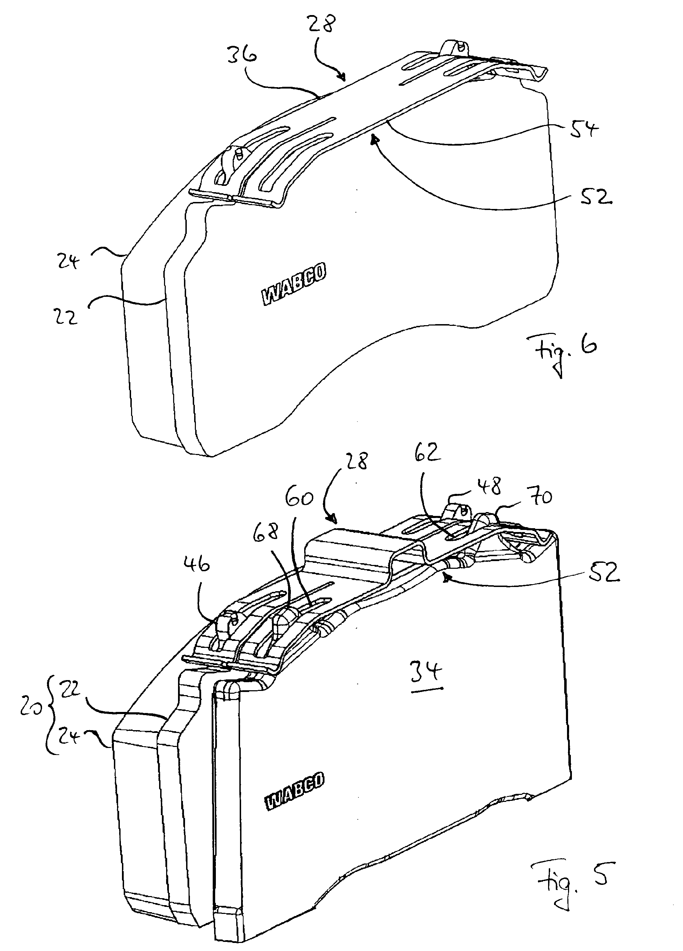

Bei dem Ausführungsbeispiel nach Figur 6 ist der Mittenbereich 36 bzw. 54 der Niederhaltefedern 28 bzw. 52 eben ausgestaltet, wohingegen er bei dem Ausführungsbeispiel nach Figur 2 einen nach außen weisenden Radialansatz darstellt bzw. ausbildet. Welche Ausgestaltung in der Praxis verwendet wird, entscheidet sich nach den jeweiligen übrigen Gegebenheiten.

Dadurch daß die beiden Niederhaltefedern 28 und 52 einstückig miteinander ausgebildet sind, ist die Teilezahl reduziert. Darüber hinaus ist ein Fehleinbau vermieden, weil eine verdrehte Anbringung der Niederhaltefeder 28 oder 52 auf dem Bremsbelag 20 oder eine Anbringung der Niederhaltefeder(n) zusammen mit dem Bremsbelag auf der Felgenseite anstelle auf der Zuspannseite zu Unzuträglichkeiten führt. Bei korrektem Einbau steht nämlich der in Form der Niederhaltefeder 52 ausgeführte Ansatz der Niederhaltefeder 28 über die Rückenplatte 22 des Bremsbelages 20 über, wo er zum Niederhalten der Druckplatte 34 verwendet wird. Bei den genannten Fehleinbauten wird er nicht etwa über die Rückenplatte 22, sondern vielmehr über den Reibbelag 24 überstehen (verdrehter Einbau) oder auf der Felgenseite in einen Bereich der Bremse hineinragen, in dem er an andere Teile anstößt, so daß (automatisch) auf einen solchen Fehleinbau hingewiesen wird. Eine Bedienperson, die einen solchen Fehleinbau versucht, wird daher angesichts der genannten Unzuträglichkeiten den Fehler erkennen und daraufhin die korrekte Einbaulage wählen.

Die in der obigen Beschreibung, den Ansprüchen sowie der Zeichnung offenbarten Merkmale der Erfindung können sowohl einzeln als auch in beliebigen Kombinationen für die Verwirklichung der Erfindung in ihren verschiedenen Ausführungsformen wesentlich sein.

## Patentansprüche

1. Scheibenbremse, insbesondere für Nutzfahrzeuge, mit
einem Bremsbelag (20), der einen in Dickenrichtung außermittig liegenden ersten Vorsprung (46, 48) aufweist,
einer Zuspanneinrichtung zum Drücken des Bremsbelages gegen eine Bremsscheibe,
einer Druckplatte (34), über die die Zuspanneinrichtung beim Bremsen den Bremsbelag gegen die Bremsscheibe drückt, und
einer eine Öffnung (42, 44) zum Aufnehmen des ersten Vorsprungs aufweisenden ersten Niederhaltefeder (28) zum Niederhalten des Bremsbelages,
**gekennzeichnet durch**
einen Ansatz (52) an der Niederhaltefeder (28), der in montiertem Zustand in Axialrichtung der Bremsscheibe einseitig über den Bremsbelag (20) übersteht.

2. Scheibenbremse nach Anspruch 1, **dadurch gekennzeichnet, daß** der Ansatz (52) einstückig mit der Niederhaltefeder (28) ausgebildet ist.

3. Scheibenbremse nach Anspruch 1 oder 2, **dadurch gekennzeichnet, daß** der Ansatz (52) zum Niederhalten der Druckplatte (34) dient.

4. Scheibenbremse nach einem der vorangehenden Ansprüche, **dadurch gekennzeichnet, daß** der Ansatz (52) als zweite Niederhaltefeder ausgebildet ist.

5. Scheibenbremse nach Anspruch 4, **dadurch gekennzeichnet, daß** die erste und/oder die zweite Niederhaltefeder (28, 52) zwei seitliche Schenkel (38, 40; 56, 58) und einen Mittenbereich (36; 54) aufweist/aufweisen.

6. Scheibenbremse nach Anspruch 5, **dadurch gekennzeichnet, daß** ein seitlicher Schenkel (38, 40) der ersten Niederhaltefeder (28) durch einen Schlitz (64, 66) von dem benachbarten seitlichen Schenkel (56, 58) der zweiten Niederhaltefeder (52) getrennt ist.

7. Scheibenbremse nach einem der Ansprüche 4 bis 6, **dadurch gekennzeichnet, daß** die erste und/oder die zweite Niederhaltefeder (28, 52) zumindest abschnittweise eben oder bogenförmig ist/sind oder einen nach innen oder außen weisenden Radialansatz aufweist/aufweisen.

8. Scheibenbremse nach einem der vorangehenden Ansprüche, **dadurch gekennzeichnet, daß** der Ansatz (52) eine Öffnung (60, 62) zum Aufnehmen eines an der Druckplatte (34) ausgebildeten zweiten Vorsprungs (68, 70) aufweist.

9. Scheibenbremse nach einem der vorangehenden Ansprüche, **dadurch gekennzeichnet, daß**
die erste Öffnung (42, 44) eine Durchgangsöffnung ist und
der erste Vorsprung (46, 48) in eingebautem Zustand in Axialrichtung der Bremsscheibe über eine Begrenzung der ersten Öffnung übersteht, um eine Ausfederbegrenzung für einen seitlichen Federschenkel (38, 40) der ersten Niederhaltefeder (28) zu bilden.

10. Niederhaltefeder (28) einer Scheibenbremse nach einem der vorangehenden Ansprüche.

## Claims

1. Disc brake, in particular for commercial vehicles, having a brake lining (20) which has a first projection (46, 48) which lies eccentrically in the thickness direction, a brake application device for pressing the brake linings against a brake disc, a pressure plate (34), via which the brake application device presses the brake lining against the brake disc during braking, and a first hold-down spring (28) which has an opening (42, 44) for receiving the first projection in order to hold down the brake lining, **characterized by** an extension (52) on the hold-down spring (28), which extension (52) protrudes beyond the brake lining (20) on one side in the axial direction of the brake disc in the mounted state.

2. Disc brake according to Claim 1, **characterized in that** the extension (52) is configured in one piece with the hold-down spring (28).

3. Disc brake according to Claim 1 or 2, **characterized in that** the extension (52) serves to hold down the pressure plate (34).

4. Disc brake according to one of the preceding claims, **characterized in that** the extension (52) is configured as a second hold-down spring.

5. Disc brake according to Claim 4, **characterized in that** the first and/or the second hold-down spring (28, 52) have/has two lateral limbs (38, 40; 56, 58) and a central region (36; 54).

6. Disc brake according to Claim 5, **characterized in that** a lateral limb (38, 40) of the first hold-down spring (28) is separated from the adjacent lateral limb (56, 58) of the second hold-down spring (52) by a slot (64, 66).

7. Disc brake according to one of Claims 4 to 6, **characterized in that** the first and/or the second hold-down spring (28, 52) are/is flat or arcuate at least in sections or have/has an inwardly or outwardly pointing radial extension.

8. Disc brake according to one of the preceding claims, **characterized in that** the extension (52) has an opening (60, 62) for receiving a second projection (68, 70) which is configured on the pressure plate (34).

9. Disc brake according to one of the preceding claims, **characterized in that** the first opening (42, 44) is a through opening and the first projection (46, 48) protrudes beyond a boundary of the first opening in the axial direction of the brake disc in the mounted state, in order to form a rebound limit for a lateral spring limb (38, 40) of the first hold-down spring (28).

10. Hold-down spring (28) of a disc brake according to one of the preceding claims.

## Revendications

1. Frein à disque, en particulier pour véhicules utilitaires, comprenant
une garniture de frein (20) qui présente une première saillie (46, 48) située de manière excentrée dans la direction de l'épaisseur,
un dispositif de serrage pour presser la garniture de frein contre un disque de frein,
une plaque de pression (34) par le biais de laquelle le dispositif de serrage presse la garniture de frein contre le disque de frein lors du freinage, et
un premier ressort de retenue (28) pour retenir la garniture de frein, présentant une ouverture (42, 44) pour recevoir la première saillie,
**caractérisé par**
une partie saillante (52) sur le ressort de retenue (28), qui, dans l'état monté, fait saillie dans la direction axiale du disque de frein d'un côté au-delà de la garniture de frein (20).

2. Frein à disque selon la revendication 1, **caractérisé en ce que** la partie saillante (52) est réalisée d'une seule pièce avec le ressort de retenue (28).

3. Frein à disque selon la revendication 1 ou 2, **caractérisé en ce que** la partie saillante (52) sert à retenir la plaque de pression (34).

4. Frein à disque selon l'une quelconque des revendications précédentes, **caractérisé en ce que** la partie saillante (52) est réalisée sous forme de deuxième ressort de retenue.

5. Frein à disque selon la revendication 4, **caractérisé en ce que** le premier et/ou le deuxième ressort de retenue (28, 52) présente(nt) deux branches latérales (38, 40 ; 56, 58) et une région centrale (36 ; 54).

6. Frein à disque selon la revendication 5, **caractérisé en ce qu'**une branche latérale (38, 40) du premier ressort de retenue (28) est séparée par une fente (64, 66) de la branche latérale adjacente (56, 58) du deuxième ressort de retenue (52).

7. Frein à disque selon l'une quelconque des revendications 4 à 6,
**caractérisé en ce que** le premier et/ou le deuxième ressort de retenue (28, 52) est/sont au moins en partie plan(s) ou courbe(s) ou présente(nt) une partie saillante radiale tournée vers l'intérieur ou vers l'extérieur.

8. Frein à disque selon l'une quelconque des revendications précédentes, **caractérisé en ce que** la partie saillante (52) présente une ouverture (60, 62) pour recevoir une deuxième saillie (68, 70) réalisée sur la plaque de pression (34).

9. Frein à disque selon l'une quelconque des revendications précédentes, **caractérisé en ce que** la première ouverture (42, 44) est une ouverture de passage et
la première saillie (46, 48), dans l'état monté dans la direction axiale du disque de frein, fait saillie au-delà d'une limite de la première ouverture, afin de former une limitation de débattement pour une branche de ressort latérale (38, 40) du premier ressort de retenue (28).

10. Ressort de retenue (28) d'un frein à disque selon l'une quelconque des revendications précédentes.
